# FASCICULE DE BREVET EUROPEEN

(11) **EP 0 434 524 B1**
(45) Date de publication et mention de la délivrance du brevet: **15.06.1994**
(21) Numéro de dépôt: 90403599.5
(22) Date de dépôt: 14.12.1990
(51) Int. Cl.: A23K 1/16

(54) **Utilisation d'un désodorisant pour aliments pour animaux a base d'ester d'acide undécylénique et aliments pour animaux contenant ledit ester**
Verwendung eines Desodorierungsmittels enthaltend Undecylensäureester für Tierfutter sowie Tierfutter enthaltend diese Ester
Use of a deodorant comprising undecylenate ester for animal feeds and animal feed containing said ester

(30) Priorité: 19.12.1989 FR 8916794
(43) Date de publication de la demande: 26.06.1991
(73) Titulaire: DELTA AGRO INDUSTRIES, F-75015 Paris (FR); ELF ATOCHEM S.A., 92800 Puteaux (FR)
(72) Inventeur: Menassa, Aimé, F-75016 Paris (FR); Caupin, Henri, F-78000 Versailles (FR)
(74) Mandataire: Rochet, Michel

(56) Documents cités:
- DE-A- 1 792 467
- DE-A- 2 263 509
- DE-A- 2 447 627
- US-A- 3 953 377
- CHEMICAL ABSTRACTS, vol. 45, no. 11, juin 1951, colonne 4851a, Columbus, Ohio,
- US; & JP-A-176 102 (SOGO TETSUMOTO) 22-04-1948
- COMMONWEALTH AGRICULTURAL BUREAUX, 0V049-02533, VETERINARY BULLETIN; A. HERA etal.: "Clinical trials of the antifungal efficacy of griseofulvin. II. Furtherexperiments in the treatment of trichophyton infection in cattle",& BIOLOGIZACE A CHEMIZACE ZIVOCISNE VYROBY VETERINARIA, VOL. 14,NO. 1, 1978, PAGES 181-191
- DERWENT FILE SUPPLIER WPIL, 1981, accession no. 81-66783D [37], DerwentPublications Ltd, Londres, GB;& JP-A-56 092 247 (HASEGAWA K.K.) 25-07-1981

## Description

L'invention a pour objet l'utilisation d'une substance désodorisante pour aliments pour animaux.

On connaît des utilisations de compositions désodorisantes.

Dans DE-A-2 263 509, on décrit l'utilisation d'une composition à base d'ester alkylique (C₁-C₄) d'acide undécylénique pour la prévention des odeurs corporelles chez l'Homme.

Dans DE-A-1792 467, on enseigne l'utilisation d'une composition destinée à repousser le gibier sauvage responsable de la détérioration des cultures.

Cette composition contient l'acide undécylénique éventuellement associé à l'urée, l'hexanol, l'acide lactique et aux esters d'acide gras insaturés tel que l'undécylénate de méthyle.

Dans DE-A-2 447 627, on décrit l'utilisation d'une composition antimicrobienne à base d'ester diisopropylique d'acide undécylénique pour le traitement des maladies de la peau chez l'Homme.

En matière de fabrication d'aliments composés, la formulation de diverses matières premières conduit à constituer des aliments répondant à des cahiers de charges nutritionnels. Toutefois, les composantes de la qualité d'un aliment composé sont aussi physiques. Ces critères physiques différents d'une espèce à l'autre sont aussi plus ou moins primordiaux.

Les fabricants d'aliments résolvent leurs problèmes d'odeurs par l'arômatisation, pratique plus ou moins systématiquement selon le type d'aliment.

L'arômatisation est bien souvent considérée comme un surcoût pour le fabricant, qu'il cherchera à minimiser. Elle est cependant indispensable pour certains animaux (porcelet par exemple), mais aussi quand la formulation met en oeuvre des co-produits à odeur particulière.

L'invention concerne plus précisément l'utilisation d'une substance absorbante d'odeurs, caractérisée en ce que ladite substance comprend un ester alkylique ou polyoxyalkylénique d'acide undécylénique.

Parmi ces produits, l'invention concerne tout particulièrement les esters aikyliques en C₁ et C₁₂ et les esters de polyoxyéthylène, polyoxypropylène et poly(oxyéthylène)(oxypropylène) dudit acide undécylénique. Elle concerne encore plus précisément les undécylénates de méthyle, de propyle, d'hexyle, de décyle ainsi que les esters polyoxyalkyléniques renfermant de 2 à 20 motifs oxyalkylène.

La substance absorbante utilisée conformément à l'invention peut être constituée d'un seul des produits précités ou d'un mélange desdits produits,
ce ou ces produits pouvant eux-mêmes être mis en oeuvre tels quels ou sous forme de solution ou suspension, ou encore sous forme absorbée sur un support.

D'une manière générale, les esters undécyléniques sont efficaces à très faible dose, par exemple de l'ordre de 0,1 et 5 % par rapport à la masse traiter.

On peut naturellement former des compositions comprenant le ou les esters undécyléniques précités et des additifs tels que des agents bactériostatiques.

Les désodorisants qui font l'objet de l'utilisation selon l'invention, peuvent être associés à diverses familles d'aliments pour animaux, parmi lesquelles on peut citer notamment les aliments à base de phosphates, polyphosphates, ou d'extraits d'animaux et/ou de farines animales.

La courbe annexée et qui constitue un exemple d'illustration non limitatif, montre l'efficacité de certains esters d'acide undécylénique.

Sur cette courbe, l'axe des abscisses représente le taux d'incorporation de l'ester undécylénique, l'axe des ordonnées représentant le degré de perception olfactive de l'odeur, les valeurs 1 à 6 signifiant respectivement: néant, très faible, faible, moyen, fort et très fort.

Cette courbe unique correspond en fait aux résultats obtenus sur des granulés HPB concentré minéral vitaminé à base de polyphosphates et de farines animales avec les esters suivants : undécylénate de méthyle, esters polyoxyéthyléniques d'acide undécylénique à 8, 10 et 12 motifs oxyéthylène.

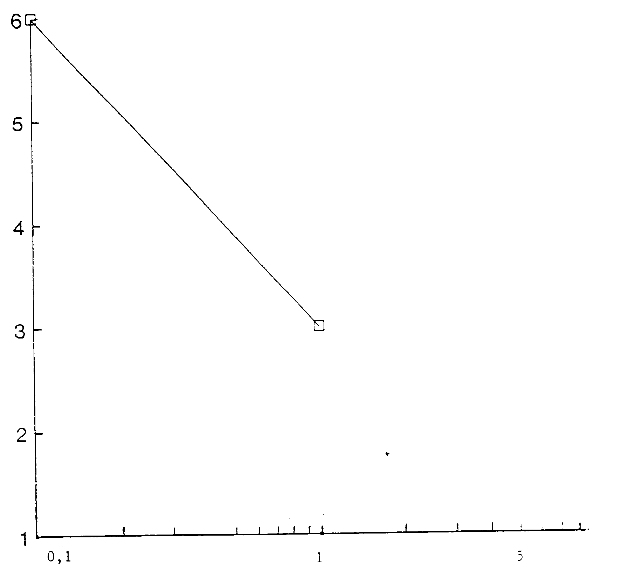

## Revendications

1. Utilisation d'un désodorisant comprenant un ester alkylique ou polyoxyalkylénique d'acide undécylénique pour la désodorisation des aliments pour animaux.

2. Utilisation selon la revendication 1 caractérisée en ce que le désodorisant est choisi parmi les esters alkyliques en C₁ - C₁₂ et les esters de polyoxyalkylène, polyoxypropylène et poly(oxyéthylène) (oxypropylène) de l'acide undécylénique.

3. Utilisation d'une composition désodorisante comprenant un ester alkylique ou polyoxyalkylénique d'acide undécylénique et un fongicide et/ou l'acide undécylénique.

4. Aliment pour animaux contenant un désodorisant tel qu'utilisé selon l'une quelconque des revendications 1 à 3.

5. Aliment selon la revendication 4, caractérisé en ce qu'il contient de 0,1 à 5 % en poids de désodorisant.

## Patentansprüche

1. Verwendung eines einen Alkyl- oder Polyoxyalkylenester der Undecylensäure enthaltenden Deodorants zur Überdeckung der Gerüche von Tierfütter.

2. Verwendung nach Anspruch 1, dadurch gekennzeichnet, daß das Deodorant aus der Gruppe der C₁ - C₁₂ Alkylester und der Polyoxyalkylen-, Polyoxypropylen- und Poly(oxyethylen) (oxypropylen)ester der Undecylensäure ist.

3. Verwendung einer Deodorantzusammensetzung, die einen Alkyl- oder Polyoxyalkylenester der Undecylensäure und ein Fungizid und/oder Undecylensäure enthält.

4. Tierfütter, enthaltend ein Deodorant, wie dem nach einem der Ansprüche 1 bis 3 verwendeten.

5. Tierfutter nach Anspruch 4, dadurch gekennzeichnet, daß es 0,1 bis 5 Gew.% eines Deodorants enthält.

## Claims

1. Use of a deodorizing agent comprising an alkyl or polyoxyalkylene ester of undecylenic acid for deodorizing animal feeds.

2. Use according to Claim 1, characterized in that the deodorizing agent is chosen from the C₁- C₁₂-alkyl esters and the polyoxyalkylene, polyoxypropylene and poly(oxyethylene) (oxypropylene) esters of undecylenic acid.

3. Use of a deodorizing composition comprising an alkyl or polyoxyalkylene ester of undecylenic acid and a fungicide and/or undecylenic acid.

4. Animal feed comprising a deodorizing agent as used according to any one of Claims 1 to 3.

5. Feed according to Claim 4, characterized in that it comprises 0.1 to 5% by weight of deodorizing agent.
